# EUROPÄISCHE PATENTSCHRIFT

(11) **EP 2 885 555 B1**
(45) Veröffentlichungstag und Bekanntmachung des Hinweises auf die Patenterteilung: **03.01.2018**
(21) Anmeldenummer: 13736572.2
(22) Anmeldetag: 12.07.2013
(51) Int. Cl.: F16F 15/131, F16F 15/16

(54) **DREHSCHWINGUNGSDÄMPFUNGSANORDNUNG FÜR DEN ANTRIEBSSTRANG EINES FAHRZEUGS**
TORSIONAL VIBRATION DAMPING ARRANGEMENT FOR THE POWERTRAIN IN A VEHICLE
ENSEMBLE AMORTISSEUR DE VIBRATIONS DE TORSION POUR LA CHAÎNE CINÉMATIQUE D'UN VÉHICULE

(30) Priorität: 14.08.2012 DE 102012214455
(43) Veröffentlichungstag der Anmeldung: 24.06.2015
(73) Patentinhaber: ZF Friedrichshafen AG, 88046 Friedrichshafen (DE)
(72) Erfinder: LORENZ, Daniel, 97688 Bad Kissingen (DE); CARLSON, Cora, 97456 Dittelbrunn (DE); HOFFELNER, Ingrid, 97478 Knetzgau (DE); HÖCHE, Tobias, 97461 Hofheim i. UFr. (DE)
(86) Internationale Anmeldenummer: PCT/EP2013/064757
(87) Internationale Veröffentlichungsnummer: WO 2014/026812

(56) Entgegenhaltungen:
- DE-A1- 19 744 528
- DE-A1-102011 007 118

## Beschreibung

Die vorliegende Erfindung betrifft eine Drehschwingungsdämpfungsanordnung, für den Antriebsstrang eines Fahrzeugs, umfassend einen zur Drehung um eine Drehachse anzutreibenden Eingangsbereich und einen Ausgangsbereich, wobei zwischen dem Eingangsbereich und dem Ausgangsbereich ein erster Drehmomentübertragungsweg und parallel dazu ein zweiter Drehmomentübertragungsweg sowie eine Koppelanordnung zur Überlagerung der über die Drehmomentübertragungswege geleiteten Drehmomente vorgesehen sind, wobei im ersten Drehmomentübertragungsweg eine Phasenschieberanordnung zur Erzeugung einer Phasenverschiebung von über den ersten Drehmomentübertragungsweg geleiteten Drehungleichförmigkeiten bezüglich über den zweiten Drehmomentübertragungsweg geleiteten Drehungleichförmigkeiten vorgesehen ist.

Aus der deutschen Patentanmeldung DE 10 2011 007 118 A1 ist eine gattungsgemäße Drehschwingungsdämpfungsanordnung bekannt, welche das in einen Eingangsbereich beispielsweise durch eine Kurbelwelle eines Antriebsaggregates eingeleitete Drehmoment in einen über einen ersten Drehmomentübertragungsweg übertragenen Drehmomentenanteil und einen über einen zweiten Drehmomentübertragungsweg geleiteten Drehmomentenanteil aufteilt. Bei dieser Drehmomentenaufteilung wird nicht nur ein statisches Drehmoment aufgeteilt, sondern auch die im zu übertragenen Drehmoment enthaltenen Schwingungen bzw. Drehungleichförmigkeiten, beispielsweise generiert durch die periodisch auftretenden Zündungen in dem Antriebsaggregat, werden anteilig auf die beiden Drehmomentübertragungswege aufgeteilt. In einer Koppelanordnung werden die über die beiden Drehmomentübertragungswege übertragenen Drehmomentenanteile wieder zusammengeführt und dann als ein Gesamtdrehmoment in den Ausgangsbereich, beispielsweise eine Reibkupplung oder dergleichen, eingeleitet.

In zumindest einem der Drehmomentübertragungswege ist eine Phasenschieberanordnung vorgesehen, welche nach Art eines Schwingungsdämpfers, also mit einer Primärseite und einer durch die Kompressibilität einer Federanordnung bezüglich dieser verdrehbaren Sekundärseite, aufgebaut ist. Insbesondere dann, wenn dieses Schwingungssystem in einen überkritischen Zustand übergeht, also mit Schwingungen angeregt wird, die über der Resonanzfrequenz des Schwingungssystems liegen, tritt eine Phasenverschiebung von bis zu 180° auf. Dies bedeutet, dass bei maximaler Phasenverschiebung die vom Schwingungssystem abgegebenen Schwingungsanteile bezüglich der vom Schwingungssystem aufgenommenen Schwingungsanteile um 180° phasenverschoben sind. Da die über den anderen Drehmomentübertragungsweg geleiteten Schwingungsanteile keine oder ggf. eine andere Phasenverschiebung erfahren, können die in den zusammengeführten Drehmomentenanteilen enthaltenen und bezüglich einander dann phasenverschobenen Schwingungsanteile einander destruktiv überlagert werden, so dass im Idealfall das in den Ausgangsbereich eingeleitete Gesamtdrehmoment einem ein im Wesentlichen keine Schwingungsanteile enthaltenes statisches Drehmoment ist.

Dokument DE10 2011 075 242 wird als nächstliegender Stand der Technik angesehen und offenbart die technischen Merkmale des Oberbegriffes des Anspruchs 1.

Ausgehend vom erläuterten Stand der Technik ist die Aufgabe der vorliegenden Erfindung, eine Drehschwingungsdämpfungsanordnung so weiterzubilden, dass diese ein noch weiter verbessertes Schwingungsdämpfungsverhalten aufweist und kostengünstiger zu fertigen ist.

Diese Aufgabe wird durch eine gattungsgemäße Drehschwingungsdämpfungsanordnung, welche zusätzlich das kennzeichnende Merkmal des Anspruches 1 umfasst, gelöst.

Gemäß der Erfindung wird diese Aufgabe gelöst durch eine Drehschwingungsdämpfungsanordnung für den Antriebsstrang eines Fahrzeugs, umfassend einen zur Drehung um eine Drehachse anzutreibenden Eingangsbereich und einen Ausgangsbereich, wobei zwischen dem Eingangsbereich und dem Ausgangsbereich ein erster Drehmomentübertragungsweg und parallel dazu ein zweiter Drehmomentübertragungsweg sowie eine, mit dem Ausgangsbereich in Verbindung stehende Koppelanordnung zur Überlagerung der über die Drehmomentübertragungswege geleiteten Drehmomente vorgesehen sind und wobei im ersten Drehmomentübertragungsweg eine Phasenschieberanordnung zur Erzeugung einer Phasenverschiebung von über den ersten Drehmomentübertragungsweg geleiteten Drehungleichförmigkeiten bezüglich über den zweiten Drehmomentübertragungsweg geleiteten Drehungleichförmigkeiten vorgesehen ist.

Einen Raumbereich, den die Drehschwingungsdämpfungsanordnung einschließt ist als ein Nassraum gebildet, in dem zumindest teilweise Schmiermittel wie Öle oder Fette beinhaltet sein können. Dabei nimmt der Nassraum zumindest Teilbereiche von der Phasenschieberanordnung und oder der Koppelanordnung auf. Ein, die Drehschwingungsdämpfungsanordnung umgebenden Raum kann als ein Trockenraum oder eine Umgebung bezeichnet werden.

Dabei ist der Nassraum der Drehschwingungsdämpfungsanordnung zu der Umgebung mit einem einzigen, zwischen zwei relativ zueinander verdrehbaren Elementen angeordneten Dichtelement abgedichtet.

Diese Ausführungsform ist besonders vorteilhaft, da durch eine Verwendung von nur einem einzigen Dichtelement die Reibung reduziert werden kann, weniger Leckagemöglichkeiten vorhanden sind, der Produktionsablauf vereinfacht und eine Bauteilanzahl verringert werden kann. Durch eine vorteilhafte Verwendung einer Adapterplatte oder einer Flexplate, die drehfest mit dem Ausgangsbereich des Antriebsaggregates verbunden ist, kann die Drehschwingungsdämpfungsanordnung in einem radial äußeren Bereich an die Adapterplatte oder Flexplate drehfest befestigt werden. Durch diese vorteilhafte Ausgestaltung entfallen beispielsweise Durchgriffsöffnungen in einem Innenbereich der Drehschwingungsdämpfungsanordnung für eine Montage einer Kurbelwellenschraube. Durch diese Ausgestaltung kann das Dichtelement in einem radialen Bereich positioniert werden, in dem sonst die Durchgriffsöffnung für die Kurbelwellenschraube positioniert ist.

Dabei kann eine Primärmasse der Drehschwingungsdämpfungsanordnung einerseits drehfest mit beispielsweise hier der Adapterplatte oder der Flexplate verbunden sein, die wiederum selbst drehfest an einen Ausgangsbereich des Antriebsaggregates, beispielsweise hier die Kurbelwelle, drehfest verbunden ist. Andererseits kann die Primärmasse drehfest mit einem Mitteldeckblech und das Mitteldeckblech mit einem Ansteuerblech eines Außenfedersatzes drehfest verbunden sein. Die Primärmasse bildet hierbei auch einen Planetenradträger an dem mit einem Planetenradbolzen ein gestuftes oder ungestuftes Planetenrad der Koppelanordnung positioniert ist. Diese Positionierung der Koppelanordnung an die Primärmasse ist hinsichtlich der Steifigkeit, Funktion, Kosten und Teileanzahl als besonders vorteilhaft anzusehen. Diese Komponenten ergeben zusammen mit den Planetenrädern eine Primärseite der Drehschwingungsdämpfungsanordnung.

Bei einem Drehmomentverlauf in axialer Richtung um die Drehachse A wird im ersten Drehmomentübertragungsweg der Außenfedersatz über die Primärmasse, das Mitteldeckblech und das Ansteuerblech mit einem ersten Drehmoment, das von dem Antriebsaggregat, beispielsweise von einem Verbrennungsmotor kommt, beaufschlagt. Von dem Außenfedersatz gelangt das erste Drehmoment über eine Nabenscheibe zueinem Innenfedersatz, der radial innerhalb des Außenfedersatzes positioniert ist und sich axial zumindest teilweise mit dem Außenfedersatz überdeckt. Von dem Innenfedersatz gelangt das erste Drehmoment über zumindest ein Abdeckblech, welches in axialer Richtung mit der Drehachse A seitlich an der Nabenscheibe und relativ verdrehbar zu der Nabenscheibe angeordnet ist, über einen Nietbolzen, ein Zwischenelement und ein Antriebsholrad zu einem gestuften oder ungestuften Planetenrad. Dabei sind das zumindest eine Abdeckblech, das Zwischenelement und das Antriebsholrad drehfest miteinander verbunden. Um die relative Verdrehbarkeit zwischen der Nabenscheibe und dem zumindest einen Abdeckblech zu bewirken, wird der Nietbolzen durch eine Durchsteckbohrung der Nabenscheibe, die axial parallel zur Drehachse A verläuft, positioniert. Dabei ist die Durchsteckbohrung vorteilhaft als ein radial um die Drehachse A verlaufendes Langloch auszuführen.

Im zweiten Drehmomentübertragungsweg gelangt das zweite Drehmoment über die Adapterplatte oder die Flexplate und über die Primärmasse und einem Planetenradbolzen direkt an das Planetenrad, das gestuft oder ungestuft sein kann. An dem Planetenrad wird das erste Drehmoment und das zweite Drehmoment wieder zusammengeführt. Mittels eines Abtriebsholrades kann das Drehmoment über einen Abtriebsholradträger und einem Verbindungsflansch, der radial innen mittels eines Lagers an ein Verbindungsbleches, das drehfest mit der Primärmasse verbunden ist, drehbar gelagert ist ans das Sekundärschwungrad weitergeführt werden. Das Sekundärschwungrad bildet hier den Ausgangsbereich der Drehschwingungsdämpfungsanordnung. Von hier aus kann das Drehmoment an eine Reibkupplung, Wandler oder ähnliches weitergeführt werden.

Vorteilhafte Ausgestaltungen und Weiterbildungen der Erfindung sind in den abhängigen Ansprüchen angegeben. Erfindungsgemäß umfasst die Koppelanordnung ein erstes und ein zweites Eingangsteil, in die über den ersten und den zweiten Drehmomentübertragungsweg geführte Drehmomente eingeleitet werden, sowie eine Überlagerungseinheit, in der die eingeleiteten Drehmomente wieder zusammengeführt werden und ein Ausgangsteil, dass das zusammengeführte Drehmoment zum Beispiel an eine Reibkupplung weiterführt. Das erste Eingangsteil ist in seiner Wirkrichtung auf der einen Seite mit der Phasenschieberanordnung und auf der anderen Seite mit der Überlagerungseinheit verbunden. Das zweite Eingangsteil ist in seiner Wirkrichtung auf der einen Seite mit dem Eingangsbereich und auf der anderen Seite mit der Überlagerungseinheit verbunden. Die Überlagerungseinheit wiederum ist in ihrer Wirkrichtung auf der einen Seite sowohl mit dem ersten als auch mit dem zweiten Eingangsteil und auf der anderen Seite mit dem Ausgangsteil verbunden. Das Ausgangsteil bildet den Ausgangsbereich und kann in einer vorteilhaften Ausgestaltung eine Reibkupplung aufnehmen.

Um in einfacher Art und Weise die Phasenverschiebung in einem der Drehmomentübertragungswege erlangen zu können, wird vorgeschlagen, dass die Phasenschieberanordnung ein Schwingungssystem mit einer Primärmasse und einer gegen die Wirkung einer Federanordnung bezüglich der Primärmasse um die Drehachse A drehbaren Sekundärmasse umfasst. Ein derartiges Schwingungssystem kann also nach Art eines an sich bekannten Schwingungsdämpfers aufgebaut sein, bei dem insbesondere durch Beeinflussung der primärseitigen Masse und der sekundärseitigen Masse bzw. auch der Steifigkeit der Federanordnung die Resonanzfrequenz des Schwingungssystems definiert eingestellt werden kann und damit auch festgelegt werden kann, bei welcher Frequenz ein Übergang in den überkritischen Zustand auftritt.

In einer weiteren vorteilhaften Ausgestaltung der Drehschwingungsdämpfungsanordnung kann das Dichtelement zwischen zwei relativ zueinander verdrehbar angeordneten Elementen positioniert werden. Dabei ist ein Umfang eines Bereiches des Dichtelementes, an dem eine Relativbewegung zu einem anderen Bauteil auftritt möglichst gering auszuführen, um die Reibung zwischen dem Dichtelement und dem Bauteil, das zu dem Dichtelement eine Relativbewegung ausführt, gering zu halten.

Eine weitere günstige Ausgestaltung sieht vor, dass das Dichtelement zwischen dem Ausgangsteil oder einem damit drehfest verbundenen Element des Ausgangsbereiches und einem mit dem Eingangsbereich drehfest verbundenen Element verbunden ist. Dies kann in der Form ausgestaltet sein, dass das Ausgangsteil einen Abtriebsholradträger und das mit dem Eingangsbreich drehfest verbundene Element eine Deckblechfortführung bildet, zwischen diesen das Dichtelement positioniert ist. Dabei kann das Dichtelement entweder mit dem Abtriebsholradträger oder mit der Deckblechfortführung drehfest verbunden sein. Je nachdem welche Ausführungsform Anwendung findet, ist beispielsweise die Relativbewegung zwischen dem Dichtelement und dem Abtriebsholradträger oder zwischen dem Dichtelement und der Deckblechfortführung gegeben.

In einer weiteren vorteilhaften Ausgestaltung der Drehschwingungsdämfungsanordnung kann das Dichtelement radial überdeckend zu einem Befestigungsabschnitt der Drehschwingungsdämpfungsanordnung an das Antriebsaggregat oder radial innerhalb des Befestigungsabschnittes der Drehschwingungsdämpfungsanordnung an das Antriebsaggregat angeordnet sein. Dabei kann beispielsweise der Befestigungsabschnitt aus zumindest einer Kurbelwellenschraube gebildet werden, die die Drehschwingungsdämpfungsanordnung an das Antriebsaggregat, hier beispielsweise durch die Kurbelwelle gebildet, anbindet. Um das Dichtelement radial überdeckend oder radial innerhalb des Befestigungsabschnittes positionieren zu können, ist es notwendig, dass eine Durchgriffsöffnung in einem Innenbereich der Drehschwingungsdämpfungsanordnung, die zu einem Durchführen der Kurbelwellenschrauben notwendig ist, nicht vorhanden ist. Um die Drehschwingungsdämpfungsanordnung an das Antriebsaggregat befestigen zu können kann dies mit Hilfe einer Adapterplatte oder einer Flexplate erfolgen. Die Adapterplatte oder die Flexplate wird in ihrem Innenbereich mittels der Kurbelwellenschrauben an die Kurbelwelle des Antriebsaggregates befestigt. Am Außenbereich der Adapterplatte oder der Flexplate wird die Drehschwingungsdämpfungsanordnung vornehmlich mittels einer Schraubverbindung befestigt. Durch die Verwendung der Adapterplatte oder der Flexplate kann auf die Durchgriffsöffnung verzichtet werden, da die Drehschwingungsdämpfungsanordnung nicht radial innen, sondern radial außen mittels der Adapterplatte oder der Flexplate an den Ausgang des Antriebsaggregates befestigt wird.

Eine weitere günstige Ausgestaltung sieht vor, dass das Dichtelement radial außerhalb des Befestigungsabschnittes der Drehschwingungsdämpfungsanordnung an das Antriebsaggregat angeordnet ist. Dies kann vornehmlich dann ausgeführt werden, wenn die Drehschwingungsdämpfungsanordnung in dem radial inneren Bereich mit zumindest einer Durchgriffsöffnung, die vornehmlich an einem Verbindungsflansch positioniert sein kann, versehen ist, um die zumindest eine Kurbelwellenschraube im radial inneren Bereich der Drehschwingungsdämpfungsanordnung für die Montage der Drehschwingungsdämpfungsanordnung an den Ausgangsbereich des Antriebsaggregates durchführen zu können. Diese Ausführungsform ist besonders vorteilhaft, wenn die Drehschwingungsdämpfungsanordnung beispielsweise nicht an ihrem radial äußeren Bereich an das Antriebsaggregat befestigt werden kann. Die Durchgriffsöffnung ist dabei vorteilhaft mit einem Verschlusselement und einem Dichtring verschlossen. Dadurch kann gewährleistet werden, dass kein Schmiermittel, das sich in dem Nassraum der Drehschwingungsdämpfungsanordnung befinden kann, an die Umgebung austritt.

In einer weiteren vorteilhaften Ausgestaltung der Drehschwingungsdämpfungsanordnung kann bezüglich eines von dem Eingangsbereich zu dem Ausgangsbereich in axialer Richtung verlaufenden Drehmomentes die Koppelanordnung der Phasenschieberanordnung vorgelagert und dabei das Dichtelement der Koppelanordnung nachgelagert sein. Diese Ausgestaltung ist besonders vorteilhaft, da die Koppelanordnung starr an die Primärmasse befestigt und dadurch eine Entkopplungsgüte positiv beeinflusst werden kann.

Eine weitere günstige Ausgestaltung sieht vor, dass die Drehschwingungsdämpfungsanordnung in dem radial äußeren Bereich mit der Adapterplatte oder der Flexplate drehfest verbunden und dabei die Adapterplatte oder die Flexplate drehfest in ihrem radial inneren Bereich mit der Kurbelwelle verbunden ist. Diese Ausgestaltung ist besonders vorteilhaft, wenn keine Durchgriffsöffnungen an der Drehschwingungsdämpfungsanordnung für die Montage der Kurbelwellenschrauben vorhanden sein sollen. Ein weiterer Vorteil dieser Ausführungsform ist, dass durch das Nichtvorhandensein der Durchgriffsöffnungen im radial inneren Bereich der Drehschwingungsdämpfungsanordnung und damit auch das Nichtvorhandensein von Verschlusselement mit Dichtringen für die Durchgriffsöffnungen nur das eine Dichtelement den Nassraum der Drehschwingungsdämpfungsanordnung zu der Umgebung abdichtet und dadurch eine reduzierte Leckagemöglichkeit vorhanden ist. Auch kann das Dichtelement dadurch weiter radial innen positioniert werden, was eine Reduzierung der Reibung zur Folge hat und positiv beurteilt werden kann. Durch die vorteilhafte Verwendung der Flexplate kann weiter ein Achsversatz zwischen einer Mittelachse des Antriebsaggregates und einer Mittelachse einer Getriebeeingangswelle oder beispielsweise einer mit dem Sekundärschwungrad verbundenen Kupplungseinrichtung oder eines ähnlichen Bauteils ausgeglichen werden.

In einer weiteren vorteilhaften Ausführungsform kann die Drehschwingungsdämpfungsanordnung drehfest mit dem Ausgangsbereich des Antriebsaggregates verbunden sein. Dies ist besonders vorteilhaft, wenn, wie bereits beschrieben, die Drehschwingungsdämpfungsanordnung nicht mittels der Adapterplatte oder der Flexplate an den Ausgang des Antriebsaggregates befestigt werden kann. Dies kann der Fall sein, wenn beispielsweise aus Platzgründen die Befestigung der Drehschwingungsdämpfungsanordnung nicht im radial äußeren Bereich möglich ist. In diesem Fall wird die Drehschwingungsdämpfungsanordnung direkt an den Ausgang des Antriebsaggregat, hier beispielsweise die Kurbelwelle befestigt.

Eine weitere günstige Ausgestaltung sieht vor, dass der Ausgangsbereich oder ein damit drehfest verbundenes Element über wenigstens eine Durchgriffsöffnung verfügt, die axial mit einem Befestigungsbereich zur Befestigung der Drehschwingungsdämpfungsanordnung an den Ausgangsbereich des Antriebsaggregates fluchtet. Diese vorteilhafte Ausführungsform ermöglicht das Durchführen eines Montagewerkzeuges für eine Kurbelwellenschraube durch die Durchgriffsöffnung um beispielsweise mit der Kurbelwellenschraube die Primärmasse an den Ausgangsbereich des Antriebsaggregates drehfest zu verschrauben. Dies ist besonders vorteilhaft, da die Montage der Drehschwingungsdämpfungsanordnung als ein vorgefertigtes Zusammenbauteil an den Ausgangsbereich des Antriebsaggregates erfolgen kann. Dabei kann die Durchgriffsöffnung mit einem Verschlusselement und einem Dichtring verschlossen werden. Vorteilhaft ist auch, dass durch die Durchgriffsöffnung der Nassraum mit einem Schmiermittel wie Öl oder Fett zumindest teilweise gefüllt werden kann. Um einen Austritt des Schmiermittels zu verhindern, kann die Durchgriffsöffnung mit dem Verschlusselement und dem Dichtring verschlossen werden.

Im Folgenden werden bevorzugte Ausführungsbeispiele der Erfindung anhand der beiliegenden Figuren erläutert. Es zeigt in:

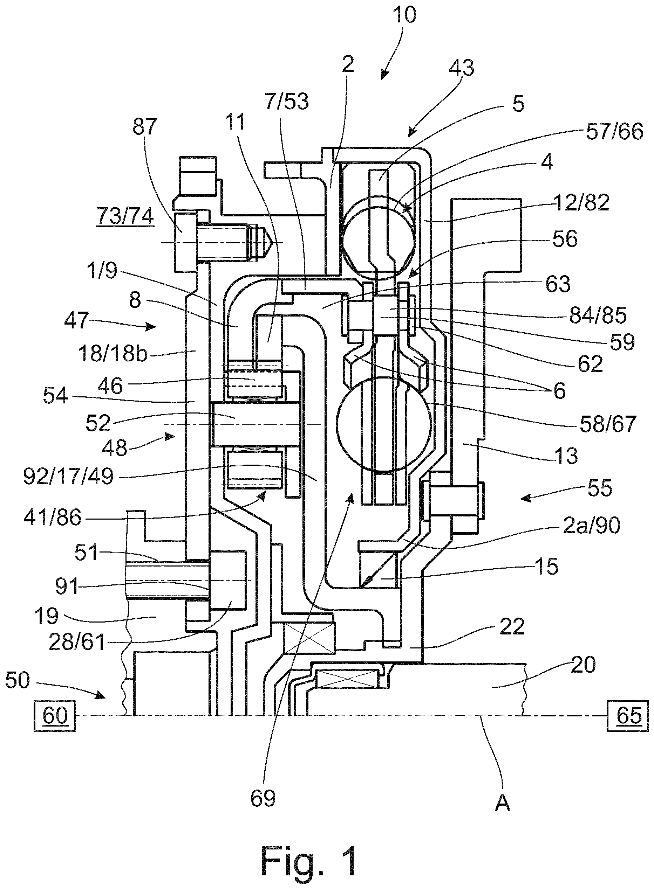

Fig. 1 eine Drehschwingungsdämpfungsanordnung mit einer Phasenschieberanordnung und einer parallel in axialer Richtung um die Drehachse A angeordneten Koppelanordnung und einem einzigen Dichtelement in einem radialen Bereich einer Verschraubung der Drehschwingungsdämpfungsanordnung an einen Ausgangsbereich eines Antriebsaggregates.

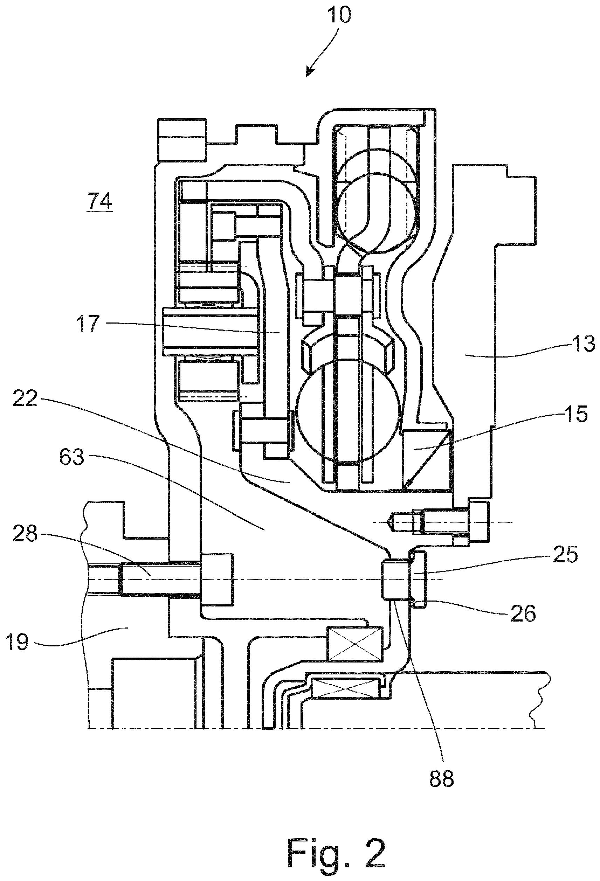

Fig. 2 eine Drehschwingungsdämpfungsanordnung mit einer Phasenschieberanordnung und einer parallel in axialer Richtung um eine Drehachse A angeordneten Koppelanordnung und einem einzigen Dichtelement in einem radialen Bereich außerhalb einer Verschraubung der Drehschwingungsdämpfungsanordnung an einen Ausgangsbereich eines Antriebsaggregates.

In Fig. 1 ist eine Drehschwingungsdämpfungsanordnung 10 dargestellt, welche nach dem Prinzip der Leistungs- bzw. Drehmomentenaufzweigung arbeitet. Die Drehschwingungsdämpfungsanordnung 10 kann in einem Antriebsstrang eines Fahrzeugs zwischen einem Antriebsaggregat und dem folgenden Teil des Antriebsstrangs, also beispielsweise ein Anfahrelement 65 wie eine Reibungskupplung, ein hydrodynamischer Drehmomentwandler oder dergleichen, angeordnet werden.

Die Drehschwingungsdämpfungsanordnung 10 umfasst einen allgemein mit 50 bezeichneten Eingangsbereich. Dieser Eingangsbereich 50 kann beispielsweise durch eine Verschraubung 61 an einer Kurbelwelle 19 eines als Verbrennungskraftmaschine ausgebildeten Antriebsaggregates 60 angebunden werden. Im Eingangsbereich 50 zweigt sich das von dem Antriebsaggregat 60 aufgenommene Drehmoment in einen ersten Drehmomentübertragungsweg 47 und einen zweiten Drehmomentübertragungsweg 48 auf. Im Bereich einer allgemein mit der Bezugsziffer 41 bezeichneten Koppelanordnung werden die über die beiden Drehmomentübertragungswege 47, 48 geleiteten Drehmomentenanteile mittels eines ersten Eingangsteils 53 und eines zweiten Eingangsteils 54 in die Koppelanordnung 41 eingeleitet und dort wieder zusammengeführt. Über ein Abtriebsholrad 11 und ein Zwischenblech 17, welche drehfest miteinander verbunden sind, wird das Drehmoment zu einem Sekundärschwungrad 13, das drehfest mit dem Zwischenblech 17 verbunden ist, geleitet. Das Sekundärschwungrad 13 kann dabei den Ausgangsbereich 55 bilden.

In dem ersten Drehmomentübertragungsweg 47 ist ein allgemein mit der Bezugsziffer 56 bezeichnetes Schwingungssystem integriert. Das Schwingungssystem 56 ist als Phasenschieberanordnung 43 wirksam und umfasst eine, beispielsweise an das Antriebsaggregat 60, anzubindende Adapterplatte 18, die auch als eine Flexplate 18b ausgeführt sein kann. An die Adapterplatte 18 ist eine Primärmasse 1 drehfest, bevorzugt mittels einer Schraubverbindung 61 befestigt. Die Primärmasse 1 ist mit einem Mitteldeckblech 2 drehfest verbunden. An diesem Mitteldeckblech 2 ist ein getriebeseitiges Deckblech 12 drehfest verbunden. Die Adapterplatte 18, die Primärmasse 1, das Mitteldeckblech 2 und das getriebeseitige Deckblech 12 umschließen nach radial außen hin im Wesentlichen vollständig einen Raumbereich 69, in welchem in Bezug auf eine radiale Umschließung die Phasenschieberanordnung 43, sowie die Koppelanordnung 41 aufgenommen werden. Dabei können auch die Primärmasse 1 und das Mitteldeckblech 2 als ein gemeinsames Bauteil ausgeführt werden. Das Schwingungssystem 56 besteht weiter aus einem Außenfedersatz 57 und einem Innenfedersatz 58, die radial zueinander angeordnet sind und in serieller Wirkweise stehen. Dabei umfassen der Außenfedersatz 57 und der Innenfedersatz 58 eine Mehrzahl von in Umfangsrichtung aufeinander folgenden und ggf. auch ineinander geschachtelt angeordneten Federelementen 66 und 67, wobei jedes Federelement 66 und 67 vorzugsweise wenigstens eine Schraubendruckfeder umfasst. In einer nicht gezeigten Ausführungsform kann die Phasenschieberanordnung auch nur einen Federsatz oder mehrerer Federsätze umfassen, Dabei können auch mehrerer Federsätze in paralleler und oder serieller Wirkweise angeordnet werden.

Der Außenfedersatz 57 stützt sich einerseits an einem Ansteuerblech 82, das aus dem getriebeseitigen Deckblech 12 gebildet werden kann und andererseits an einer als Zentralscheibe ausgebildeten Nabenscheibe 5 ab. Der Innenfedersatz 58 stützt sich einerseits an der obig genannten Nabenscheibe 5 und andererseits an zumindest einem Abdeckblech 6 ab. Dabei umfasst die Nabenscheibe 5 zwischen Außenfedersatz 57 und Innenfedersatz 58 eine, in Richtung der Drehachse A verlaufende Durchsteckbohrung 84, die als ein um die Drehachse A radial verlaufendes Langloch 85 ausgeführt ist und durch die ein Nietbolzen 59 geführt wird. Zwischen einem Nietkopf 62 des Nietbolzens 59 und der Nabenscheibe 5 wird das Abdeckblech 6 so aufgenommen, dass das Deckblech 6 drehfest mit dem Nietbolzen 59 verbunden ist und im Langloch 85 um die Drehachse A zu der Nabenscheibe 5 verdrehbar ist. An dem Nietbolzen 59 ist einseitig auf der, der Koppelanordnung zugewandten Seite, ein Zwischenelement 7 drehfest mit dem Nietbolzen 59 verbunden. Das Zwischenelement nimmt drehfest ein Antriebsholrad 8 auf, das mit einem Planetenrad 46 in Wirkverbindung steht.

Ein erstes Drehmoment kann in dem ersten Drehmomentübertragungsweg 47 von der Kurbelwelle 19 kommend über die Adapterplatte 18 oder die Flexplate 18b zu der Primärmasse 1, dem Mitteldeckblech 2 und dem Ansteuerblech 82 in den Außenfedersatz 57verlaufen. Von dem Außenfedersatz 57 wird das erste Drehmoment über die Nabenscheibe 5 zu dem Innenfedersatz 58 geleitet. Von dem Innenfedersatz 58 gelangt das erste Drehmoment über zumindest ein Abdeckblech 6, das zwischen dem Außenfedersatz 57 und dem Innenfedersatz 58 positioniert ist über das Zwischenelement 7und das Antriebsholrad 8 an das gestufte oder ungestufte Planetenrad 46. Die Positionierung des Abdeckbleches 6 zwischen dem Außenfedersatz 57 und dem Innenfedersatz 58 ist vorteilhaft für einen kompakten radialen Bauraum der Drehschwingungsdämpfungsanordnung 10.

Ein zweites Drehmoment kann in dem zweiten Drehmomentübertragungsweg 48 von der Kurbelwelle19 über die Adapterplatte 18 oder die Flexplate 18b und die Primärmasse 1 an einen Planetenradbolzen 52, auf dem das Planetenrad 46 gelagert ist, verlaufen.

Somit treffen sich am Planetenrad 46 der erste Drehmomentübertragungsweg 47 und der zweite Drehmomentübertragungsweg 48 und damit das erste und das zweite Drehmoment und bilden dort ein zusammengeführtes Drehmoment. Über das Abtriebsholrad11 gelangt das zusammengeführte Drehmoment vom Planetenrad 46 in ein Zwischenblech 17, das hier drehfest mit dem Sekundärschwungrad 13 verbunden ist. Hier kann das zusammengeführt Drehmoment beispielsweise an eine anzuflanschende Kupplung oder an einen Drehmomentwandler abgegeben werden.

Ein Nassraum 63, der den Innenraum der Drehschwingungsdämpfungsanordnung 10 bildet und die Phasenschieberanordnung 43 und die Koppelanordnung 41 umfasst, wird durch ein einziges Dichtelement 15 gegen einen Trockenraum 74, der den der Drehschwingungsdämpfungsanordnung umgebenden Raum bildet, abgedichtet. Dabei ist das Dichtelement 15 möglichst radial innen angeordnet um die Reibung des Dichtelementes zu reduzieren. Das Dichtelement 15 ist in dieser Ausführungsform zwischen dem Zwischenblech 17 und dem getriebeseitigen Deckblech 12 positioniert. Die radiale Erstreckung des Dichtelemtes 15 kann sehr gering ausgeführt werden, da im Bereich der Schraubverbindung 61 an die Kurbelwelle 19 keine Durchsteckbohrungen vorhanden sein müssen, da die Drehschwingungsdämpfungsanordnung 10 an die Kurbelwelle 19 mittels einer Adapterplatte 18 oder einer Flexplate 18b durch eine Schraubverbindung 87 drehfest verbunden wird. Dabei befindet sich die Schraubverbindung 87 in einem radial äußeren Bereich der Drehschwingungsdämpfungsanordnung 10.

Die Verwendung von nur einem einzigen Dichtelement 15, ist nicht nur bei der Produktion von Vorteil, es bedeutet auch, dass weniger Leckagemöglichkeiten vorhanden sind, was eine Funktionssicherheit der Drehschwingungsdämpfungsanordnung 10 positiv beeinflussen kann. Des Weiteren wird bei der Verwendung von nur einem einzigen Dichtelement 15 die Reibung reduziert, was sich positiv auf ein Verhalten der Torsionsschwingungsdämpferanordnung 10 auswirken kann. Eine verminderte Reibung bedeutet auch ein schnelleres Ansprechen in Bezug auf ein relatives Verdrehen des getriebeseitigen Deckbleches 12 gegenüber dem Ausgangsteil 49, zwischen denen das Dichtelement 15 positioniert ist.

In Figur 2 ist eine Drehschwingungsdämpfungsanordnung 10 wie in Figur 1 dargestellt, jedoch wird die Drehschwingungsdämpfungsanordnung 10 direkt an die Kurbelwelle 19 mittels zumindest einer Kurbelwellenschraube 28 verschraubt und nicht wie in Figur 1 dargestellt, mittels der Adapterplatte 18 oder Flexplate 18b. Dadurch bedingt ist ein Verbindungsflansch 22, der einerseits drehfest mit dem Zwischenblech 17 und andererseits drehfest mit dem Sekundärschwungrad 13 verbunden ist mit zumindest einer Durchgriffsöffnung 88 in axialer Verlängerung der Kurbelwellenschraube 28 ausgebildet. Dabei ist die Durchgriffsöffnung 88 so ausgebildet, dass die Kurbelwellenschraube 28 in ihrer Längsachse durchgeführt werden kann. Die eine Seite der Durchgriffsöffnung 88 befindet sich im Bereich des Nassraumes 63, die andere Seite im Bereich des Trockenraumes 74. Um im Bereich der Durchgriffsöffnung 88 den Nassraum 63 vom Trockenraum 74 abzudichten, ist vorgesehen, dass die Durchgriffsöffnung 88 mit einem Verschlusselement 25 und einem Dichtring 26 so verschlossen wird, so dass kein Schmiermittel, das sich im Nassraum 63 befindet, durch die Durchgrifföffnung 88 in den Trockenraum 74 gelangen kann. Auf Grund der durch die Kurbelwellenschraube 28 vorgegebenen Position der Durchgriffsöffnung 88 kann das Dichtelement 15 nur radial außerhalb der Kurbelwellenschrauben 28 positioniert werden. Diese Ausführungsmöglichkeit ist vor allem dann vorzuziehen, wenn ein Verschrauben der Drehschwingungsdämpfungsanordnung 10 im radial äußeren Bereich mittels der Schraubverbindung 87, wie in Figur 1 dargestellt, nicht möglich ist.

### Bezugszeichen

- 1: Primärmasse
- 2: Mitteldeckblech
- 2a: Deckblechfortführung
- 4: Federanordnung
- 5: Nabenscheibe
- 6: Abdeckblech
- 7: Zwischenelement
- 8: Antriebshohlrad
- 9: Planetenradträger
- 10: Drehschwingungsdämpfungsanordnung
- 11: Abtriebshohlrad
- 12: getriebeseitiges Deckblech
- 13: Sekundärschwungrad
- 15: Dichtelement
- 17: Zwischenblech
- 18: Adapterplatte
- 18b: Flexplate
- 19: Kurbelwelle
- 20: Getriebeeingangswelle
- 22: Verbindungsflansch
- 25: Verschlusselement
- 26: Dichtring
- 28: Kurbelwellenschraube
- 41: Koppelanordnung
- 43: Phasenschieberanordnung
- 46: Planetenrad
- 47: erster Drehmomentübertragungsweg
- 48: zweiter Drehmomentübertragungsweg
- 49: Ausgangsteil
- 50: Eingangsbereich
- 51: Befestigungsbohrung
- 52: Planetenradbolzen
- 53: erstes Eingangsteil
- 54: zweites Eingangsteil
- 55: Ausgangsbereich
- 56: Schwingungssystem
- 57: Außenfedersatz
- 58: Innenfedersatz
- 59: Nietbolzen
- 60: Antriebsaggregat
- 61: Verschraubung
- 62: Nietkopf
- 63: Nassraum
- 65: Anfahrelement
- 66: Federelement
- 67: Federelement
- 68: Federelement
- 69: Raumbereich
- 73: Umgebung
- 74: Trockenraum
- 82: Ansteuerblech
- 84: Durchsteckbohrung
- 85: Langloch
- 86: Überlagerungseinheit
- 87: Schraubverbindung
- 88: Durchgriffsöffnung
- 90: Element
- 91: Befestigungsabschnitt
- 92: Abtriebshohlradträger

## Patentansprüche

1. Drehschwingungsdämpfungsanordnung (10) für den Antriebsstrang eines Kraftfahrzeugs, umfassend
- einen zur Drehung um eine Drehachse (A) anzutreibenden Eingangsbereich (50) und einen Ausgangsbereich (55) und
- einen ersten Drehmomentübertragungsweg (47) und parallel dazu einen zweiten Drehmomentübertragungsweg (48), die beide von dem Eingangsbereich (50) ausgehen und
- eine, mit dem Ausgangsbereich (55) in Verbindung stehende Koppelanordnung (41) zur Überlagerung der über die Drehmomentübertragungswege (47; 48) geleiteten Drehmomente und
- eine Phasenschieberanordnung (43) für den ersten Drehmomentübertragungsweg (47) zur Erzeugung einer Phasenverschiebung von über den ersten Drehmomentübertragungsweg (47) geleiteten Drehungleichförmigkeiten bezüglich über den zweiten Drehmomentübertragungsweg (48) geleiteten Drehungleichförmigkeiten
- einen Nassraum (63), der zumindest teilweise mit einem Fluid gefüllt ist und der zumindest Teilbereiche von der Phasenschieberanordnung (43) und oder der Koppelanordnung (41) aufnimmt,
und
der Nassraum (63) mittels eines einzigen, zwischen zwei relativ zueinander verdrehbaren Elementen angeordneten Dichtelements (15) gegenüber einer Umgebung (73) abgedichtet wird.
und, dass die Koppelanordnung (41) ein erstes Eingangsteil (53), ein zweites Eingangsteil (54), eine Überlagerungseinheit (52) und ein Ausgangsteil (49) umfasst, wobei das erste Eingangsteil (53) mit der Phasenschieberanordnung (43) und der Überlagerungseinheit (52) verbunden ist und das zweite Eingangsteil (54) mit dem Eingangsbereich (50) und der Überlagerungseinheit (52) verbunden ist und die Überlagerungseinheit (52) sowohl mit dem ersten Eingangsteil (53), als auch mit dem zweiten Eingangsteil (54) und dem Ausgangsteil (49) verbunden ist und wobei das Ausgangsteil (49) den Ausgangsbereich (55) bildet,
**dadurch gekennzeichnet, dass** das Dichtelement (15) zwischen dem Ausgangsteil (49) oder einem damit drehfest verbundenen Element des Ausgangsbereiches (55) und einem mit dem Eingangsbereich (50) drehfest verbundenen Element (90) verbunden ist.

2. Drehschwingungsdämpfungsanordnung (10) nach Anspruch 1, **dadurch gekennzeichnet, dass** die Phasenschieberanordnung (43) ein Schwingungssystem (56) mit einer Primärmasse (1) und einem gegen die Wirkung einer Federanordnung (4) bezüglich der Primärmasse (1) um die Drehachse (A) drehbaren Zwischenelement (7) umfasst.

3. Drehschwingungsdämpfungsanordnung (10) nach einem der Ansprüche 1 bis 2, **dadurch gekennzeichnet, dass** das Dichtelement (15) zumindest teilweise radial überdeckend zu einem Befestigungsabschnitt (91) der Drehschwingungsdämpfungsanordnung (10) an das Antriebsaggregat (60) oder radial innerhalb des Befestigungsabschnittes (91) der Drehschwingungsdämpfungsanordnung (10) an das Antriebsaggregat (60) angeordnet ist.

4. Drehschwingungsdämpfungsanordnung (10) nach einem der Ansprüche 1 bis 2, **dadurch gekennzeichnet, dass** das Dichtelement (15) radial außerhalb des Befestigungsabschnittes (91) der Drehschwingungsdämpfungsanordnung (10) an das Antriebsaggregat (60) angeordnet ist.

5. Drehschwingungsdämpfungsanordnung (10) nach einem der Ansprüche 1 bis 4, **dadurch gekennzeichnet, dass** bezüglich eines von dem Eingangsbereich (50) zum dem Ausgangsbereich (55) in axialer Richtung verlaufenden Drehmoments die Koppelanordnung (41) der Phasenschieberanordnung (43) vorgelagert ist und dabei das Dichtelement (15) der Koppelanordnung (41) nachgelagert ist.

6. Drehschwingungsdämpfungsanordnung (10) nach einem der Ansprüche 1 bis 5, **dadurch gekennzeichnet, dass** die Drehschwingungsdämpfungsanordnung (10) im radial äußeren Bereich mit einer Adapterplatte (18) oder einer Flexplate (18b) drehfest verbunden ist und dabei die Adapterplatte (18) oder die Flexplate (18b) drehfest im radial inneren Bereich mit der Kurbelwelle (19) verbunden ist.

7. Drehschwingungsdämpfungsanordnung (10) nach einem der Ansprüche 1 bis 2, und 5, **dadurch gekennzeichnet, dass** die Drehschwingungsdämpfungsanordnung (10) drehfest mit einem Ausgangsbereich des Antriebsaggregates (60) verbunden ist.

8. Drehschwingungsdämpfungsanordnung (10) nach Anspruch 7, **dadurch gekennzeichnet, dass** der Ausgangsbereich (55) oder ein damit drehfest verbundenes Element über wenigstens eine Durchgriffsöffnung (88) verfügt, die axial mit einem Befestigungsbereich zur Befestigung der Drehschwingungsdämpfungsanordnung (10) an den Ausgangsbereich des Antriebsaggregates (60) fluchtet.

## Claims

1. Torsional vibration damping arrangement (10) for the drive train of a motor vehicle, comprising
- an input region (50) to be driven for rotation about a rotational axis (A), and an output region (55), and
- a first torque transmission path (47) and, parallel thereto, a second torque transmission path (48), which both emanate from the input region (50), and
- a coupling arrangement (41) which is connected to the output region (55) in order to superimpose the torques which are conducted via the torque transmission paths (47; 48), and
- a phase shifter arrangement (43) for the first torque transmission path (47) in order to generate a phase shift of rotational non-uniformities which are conducted via the first torque transmission path (47) with regard to rotational non-uniformities which are conducted via the second torque transmission path (48)
- a wet space (63) which is filled at least partially with a fluid, and which receives at least part regions of the phase shifter arrangement (43) and/or the coupling arrangement (41),
and
the wet space (63) being sealed with respect to a surrounding area (73) by means of a single sealing element (15) which is arranged between two elements which can be rotated relative to one another.
and in that the coupling arrangement (41) comprises a first input part (53), a second input part (54), a superimposing unit (52) and an output part (49), the first input part (53) being connected to the phase shifter arrangement (43) and the superimposing unit (52), and the second input part (54) being connected to the input region (50) and the superimposing unit (52), and the superimposing unit (52) being connected both to the first input part (53) and to the second input part (54) and the output part (49), and the output part (49) forming the output region (55),
**characterized in that** the sealing element (15) is connected between the output part (49), or an element of the output region (55) which is connected fixedly to it so as to rotate with it, and an element (90) which is connected fixedly to the input region (50) so as to rotate with it.

2. Torsional vibration damping arrangement (10) according to Claim 1, **characterized in that** the phase shifter arrangement (43) comprises a vibration system (56) with a primary mass (1) and an intermediate element (7) which can be rotated about the rotational axis (A) with regard to the primary mass (1) counter to the action of a spring arrangement (4).

3. Torsional vibration damping arrangement (10) according to either of Claims 1 and 2, **characterized in that** the sealing element (15) is arranged in an at least partially radially overlapping manner with respect to a fastening section (91) of the torsional vibration damping arrangement (10) to the drive assembly (60), or is arranged radially within the fastening section (91) of the torsional vibration damping arrangement (10) to the drive assembly (60).

4. Torsional vibration damping arrangement (10) according to either of Claims 1 and 2, **characterized in that** the sealing element (15) is arranged radially outside the fastening section (91) of the torsional vibration damping arrangement (10) to the drive assembly (60).

5. Torsional vibration damping arrangement (10) according to one of Claims 1 to 4, **characterized in that**, with regard to a torque which runs in the axial direction from the input region (50) to the output region (55), the coupling arrangement (41) is positioned upstream of the phase shifter arrangement (43), and the sealing element (15) is positioned downstream of the coupling arrangement (41) here.

6. Torsional vibration damping arrangement (10) according to one of Claims 1 to 5, **characterized in that** the torsional vibration damping arrangement (10) is connected in the radially outer region fixedly to an adapter plate (18) or a flexplate (18b) so as to rotate with it, and the adapter plate (18) or the flexplate (18b) is connected in the radially inner region fixedly to the crankshaft (19) so as to rotate with it here.

7. Torsional vibration damping arrangement (10) according to one of Claims 1, 2 and 5, **characterized in that** the torsional vibration damping arrangement (10) is connected fixedly to an output region of the drive assembly (60) so as to rotate with it.

8. Torsional vibration damping arrangement (10) according to Claim 7, **characterized in that** the output region (55), or an element which is connected fixedly thereto so as to rotate with it, has at least one passage opening (88) which is aligned axially with a fastening region for fastening the torsional vibration damping arrangement (10) to the output region of the drive assembly (60).

## Revendications

1. Agencement d'amortissement d'oscillations de torsion (10) pour la chaîne cinématique d'un véhicule automobile, comprenant :
- une région d'entrée (50) devant être entraînée en rotation autour d'un axe de rotation (A) et une région de sortie (55) et
- une première voie de transfert de couple (47), et parallèlement à celle-ci, une deuxième voie de transfert de couple (48), qui partent toutes les deux de la région d'entrée (50) et
- un agencement d'accouplement (41) en liaison avec la région de sortie (55) pour la superposition des couples transmis par le biais des voies de transfert de couple (47 ; 48) et
- un agencement de changement de phase (43) pour la première voie de transfert de couple (47) pour générer un changement de phase des irrégularités de rotation introduites par le biais de la première voie de transfert de couple (47) par rapport aux irrégularités de rotation introduites par rapport à la deuxième voie de transfert de couple (48)
- un espace humide (63) qui est rempli au moins en partie avec un fluide et qui reçoit au moins des régions partielles de l'agencement de changement de phase (43) et/ou de l'agencement d'accouplement (41),
et
l'espace humide (63) est étanchéifié vis-à-vis d'un environnement (73) au moyen d'un élément d'étanchéité unique (15) disposé entre deux éléments pouvant tourner l'un par rapport à l'autre.
et en ce que l'agencement d'accouplement (41) comprend une première partie d'entrée (53), une deuxième partie d'entrée (54), une unité de superposition (52) et une partie de sortie (49),
la première partie d'entrée (53) étant reliée à l'agencement de changement de phase (43) et à l'unité de superposition (52) et la deuxième partie d'entrée (54) étant reliée à la région d'entrée (50) et à l'unité de superposition (52) et l'unité de superposition (52) étant reliée à la fois à la première partie d'entrée (53) et à la deuxième partie d'entrée (54) et à la partie de sortie (49), et la partie de sortie (49) formant la région de sortie (55),
**caractérisé en ce que** l'élément d'étanchéité (15) est relié entre la partie de sortie (49) ou un élément de la région de sortie (55) relié de manière solidaire en rotation à celle-ci, et un élément (90) relié de manière solidaire en rotation à la région d'entrée (50).

2. Agencement d'amortissement d'oscillations de torsion (10) selon la revendication 1, **caractérisé en ce que** l'agencement de changement de phase (43) comprend un système d'oscillation (56) avec une masse primaire (1) et un élément intermédiaire (7) pouvant tourner autour de l'axe de rotation (A) à l'encontre de l'action d'un agencement de ressort (4) par rapport à la masse primaire (1).

3. Agencement d'amortissement d'oscillations de torsion (10) selon l'une quelconque des revendications 1 à 2, **caractérisé en ce que** l'élément d'étanchéité (15) est disposé au moins en partie de manière à recouvrir radialement une portion de fixation (91) de l'agencement d'amortissement d'oscillations de torsion (10) sur le groupe motopropulseur (60) ou radialement à l'intérieur de la portion de fixation (91) de l'agencement d'amortissement d'oscillations de torsion (10) sur le groupe motopropulseur (60).

4. Agencement d'amortissement d'oscillations de torsion (10) selon l'une quelconque des revendications 1 à 2, **caractérisé en ce que** l'élément d'étanchéité (15) est disposé radialement à l'extérieur de la portion de fixation (91) de l'agencement d'amortissement d'oscillations de torsion (10) sur le groupe motopropulseur (60).

5. Agencement d'amortissement d'oscillations de torsion (10) selon l'une quelconque des revendications 1 à 4, **caractérisé en ce que**, par rapport à un couple s'étendant dans la direction axiale depuis la région d'entrée (50) jusqu'à la région de sortie (55), l'agencement d'accouplement (41) est placé en amont de l'agencement de changement de phase (43) et dans ce cas l'élément d'étanchéité (15) est placé en aval de l'agencement d'accouplement (41).

6. Agencement d'amortissement d'oscillations de torsion (10) selon l'une quelconque des revendications 1 à 5, **caractérisé en ce que** l'agencement d'amortissement d'oscillations de torsion (10) est relié de manière solidaire en rotation dans la région radialement extérieure à une plaque d'adaptateur (18) ou à une plaque flexible (18b), et dans ce cas la plaque d'adaptateur (18) ou la plaque flexible (18b) est reliée de manière solidaire en rotation au vilebrequin (19) dans la région radialement interne.

7. Agencement d'amortissement d'oscillations de torsion (10) selon l'une quelconque des revendications 1 à 2, et 5, **caractérisé en ce que** l'agencement d'amortissement d'oscillations de torsion (10) est relié de manière solidaire en rotation à une région de sortie du groupe motopropulseur (60).

8. Agencement d'amortissement d'oscillations de torsion (10) selon la revendication 7, **caractérisé en ce que** la région de sortie (55) ou un élément relié de manière solidaire en rotation à celle-ci dispose d'au moins une ouverture d'accès (88) qui est en alignement axial avec une région de fixation pour la fixation de l'agencement d'amortissement d'oscillations de torsion (10) à la région de sortie du groupe motopropulseur (60).
